# EUROPEAN PATENT APPLICATION

(11) **EP 1 427 081 A2**
(43) Date of publication of application: **09.06.2004**
(21) Application number: 03027632.3
(22) Date of filing: 02.12.2003
(51) Int. Cl.: H02G 3/32

(54) **System for fastening cable mesh trays on support sections**

(30) Priority: 04.12.2002 IT to20021062
(71) Applicant: Legrand S.p.A., 20080 Zibido San Giacomo (Milano) (IT)
(72) Inventor: Spagnoli, Gian Piero, 21051 Arcisate (Varese) (IT)
(74) Representative: Deambrogi, Edgardo

(57) **Abstract**

A system for fastening a mesh cable tray (10) on a support section (12) is described, including at least one retaining member (40) for retaining the tray (10) on the section (12) and capable, on the one hand, of engaging a bottom wire (20b) of the tray (10) and, on the other hand, of engaging the free edge of a lateral wall (16), or of penetrating into an aperture (30) provided on a lateral wall (16) of the section (12) and of engaging the contour (32) of said aperture, at the transverse section plane in which the bottom wire (20b) is disposed, in such a way as to assume a stable coupling configuration.

Also described are a support bracket (12) the lateral walls (16) of which have a plurality of apertures (30) intended to receive respective retaining members (40) for retaining a mesh tray (10) bearing on the bracket (12), and a retaining member (40) comprising a concave section (42) and a pair of shaped coupling ends (44), capable of being used in the aforesaid fastening system.

## Description

The present invention relates to the installation of mesh cable-carrier systems on brackets or similar support sections. More specifically, it relates to a system for fastening a mesh cable-carrier tray on a support section comprising an upper support surface for supporting the tray and a pair of lateral walls connected to the longitudinal edges of said surface.

A cable mesh tray comprises a series of longitudinal wires and a series of U-shaped transverse wires connected to one another so as to form a network, and the series of longitudinal wires includes at least one bottom wire.

In the installation of a cable tray onto walls, support sections such as brackets or similar suspension members are used for anchoring the tray at its base or on one side.

Simple solutions for anchoring the tray to the support section provide for the production, on the support surface of the section, of projecting tongues each capable of holding a length of a longitudinal bottom wire of the tray.

Such tongues may be obtained, for example, by shearing and upsetting a portion of the support surface so as to create a space engageable by a length of wire. Once the tray is arranged in position, the tongues are bent onto the corresponding wires to hold them in position. A solution of this type is described in Spanish Utility Model ES 1 023 171.

Solutions are also known which provide for the production of simpler support sections, on the support surface of which, intended to receive the tray, one or more slots are provided, and the tray is coupled by means of separate, detachable fixing members.

European Patent Application EP 1 039 198 describes a fixing member for fixing mesh trays on brackets having a series of slots, which member consists of a clip, formed by two wings disposed in a V-shape and capable of being resiliently spread apart and/or brought together again, which clip is suitable for being lodged in a slot of the support bracket. At the base of the clip, each wing is extended at an angle to form a thin plate, coplanar with the support surface of the bracket and shaped in such a way as to grip on the one hand a wire of the tray, by surrounding it, and on the other hand an edge of the slot into which the member is inserted, guaranteeing the stability of the assembly in the mounted configuration.

In each case, provision is made for the coupling of the tray to the section to take place at the base portion of the tray bearing on the section and through the support surface of the latter.

For an installer who must work on the anchoring members for the tray - whether these are detachable or integral with the support section - for their removal, replacement or simply loosening, for example in order to uncouple the tray, the known arrangement involves considerable difficulty in working.

In fact, the installer is forced to work from above the ducting, operating inside the tray, or from beneath the section, or even from both sides, in restricted spaces so that the work is not very easy.

The aim of the present invention is therefore to provide a solution for fastening a mesh tray on a support section which is simpler and quicker and which allows easy working on the part of an installer in the operations of coupling and uncoupling the tray, avoiding the drawbacks of the prior art.

According to the present invention, this aim is achieved by means of a fastening system having the characteristics claimed in claim 1.

Particular embodiments of the invention are defined in the dependent claims.

Further subjects of the invention are a support bracket according to claim 13 and a retaining member according to claim 19, these being intended to be used in such a system.

Further characteristics and advantages of the invention will be explained in more detail in the following detailed description provided by way of non-limiting example with reference to the appended drawings, in which:
Figure 1 is a general perspective view of a length of a mesh tray fixed on a support bracket by means of a wire retaining member, according to a preferred embodiment of the invention;
Figure 2 is a general perspective view of a length of a mesh tray fixed on a support bracket by means of a sheet metal retaining member, according to an alternative embodiment;
Figures 3a and 3b are perspective views of the retaining member according to the invention, respectively in the wire form or in the sheet metal form; and
Figure 4 is a general perspective view of a length of mesh tray fixed on a C-shaped support section by means of a wire retaining member.

A mesh cable tray for industrial ducting systems is indicated in the drawings by 10. It is shown in an installed state, supported by a support bracket 12 comprising an upper support surface 14 for supporting the tray, and a pair of lateral walls 16 connected to the longitudinal edges 18 of the support surface.

The tray comprises a series of longitudinal wires 20 and a series of U-shaped transverse wires 22, connected to one another so as to form a network. The series of longitudinal wires comprises a pair of longitudinal edge wires 20a disposed beside the free ends of the transverse wires, and a plurality of longitudinal bottom wires 20b (four in number in the example illustrated) which are disposed bearing on the surface 14 of the bracket.

In the presently preferred embodiment, the bracket has a plurality of apertures 30 provided in the lateral walls 16, aligned in the longitudinal direction of the bracket and separated from one another by a distance corresponding to the predetermined distance between the longitudinal bottom wires 20b of the tray.

The apertures 30 are of elongate oval shape and have an at least partially corrugated contour 32. In particular, the contour 32 has at its upper portion 34 closest to the longitudinal connecting edge 18 a toothed profile formed by a series of notches and projections, or, in an alternative embodiment, an undulating profile.

The tray is fixed to the bracket by means of retaining members 40, preferably two in number for each bottom wire 20b bearing on the surface of the bracket and disposed on transversely opposed sides with respect to the bracket.

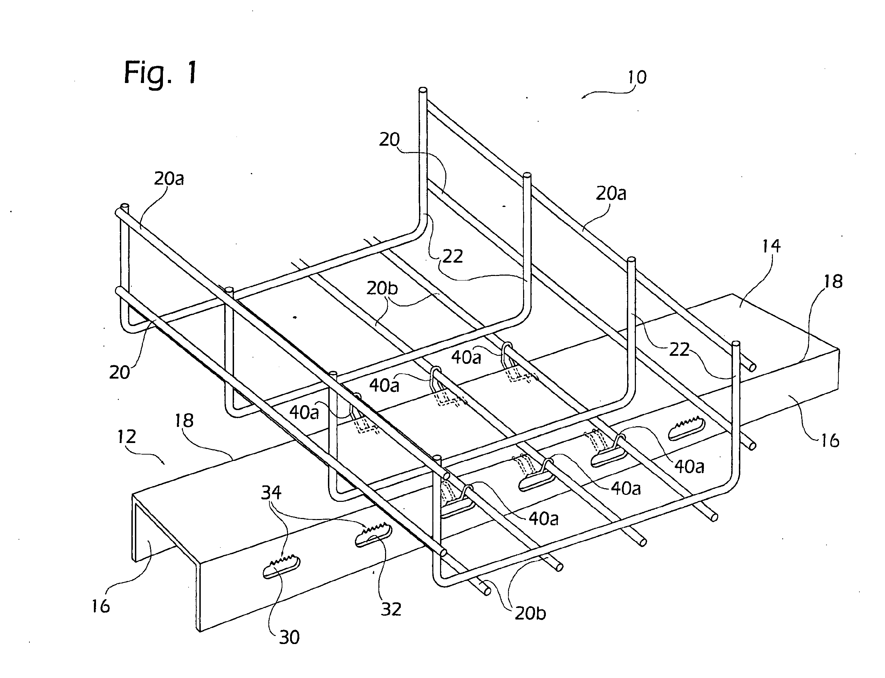

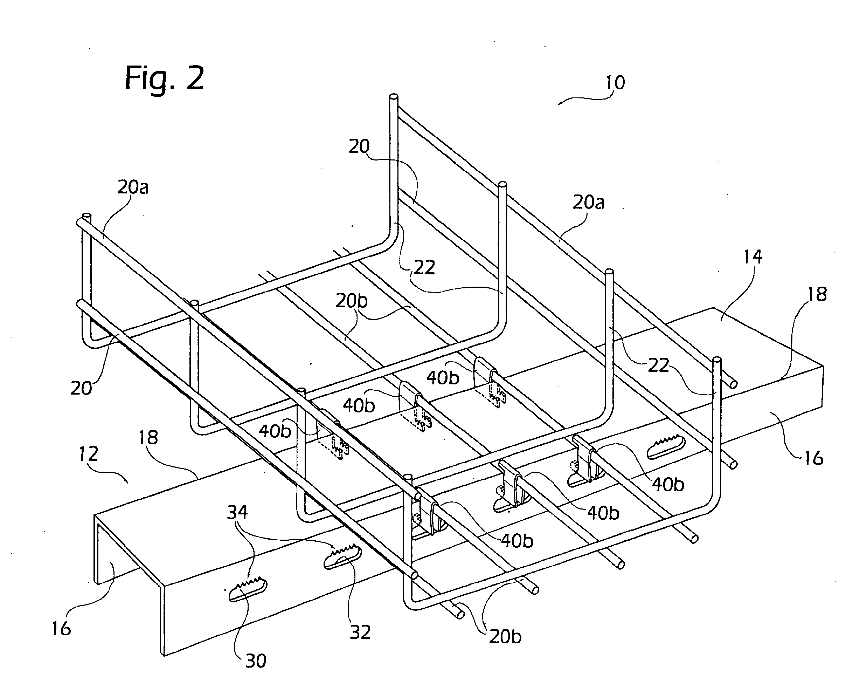

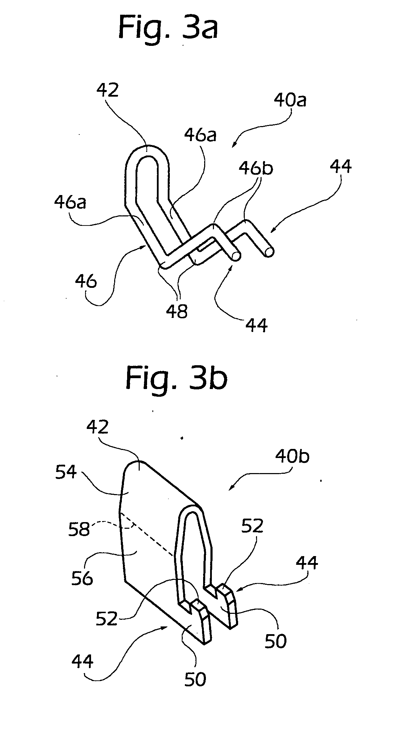

Figure 3a shows the detail of a wire retaining member 40a used in the coupling configuration of Figure 1, and Figure 3b shows a sheet metal retaining member 40b used in the coupling configuration of Figure 2.

Each retaining member is capable, on the one hand, of engaging the bottom wire of the tray and, on the other hand, of penetrating into an aperture provided on a lateral wall of the bracket and engaging the contour of said aperture, at the transverse section plane in which the bottom wire is disposed, in such a way as to assume a stable coupling configuration.

Both the retaining members 40a, 40b are bent in a U-shape in a central section thereof, so as to have a concave section 42 capable of at least partially surrounding a bottom wire 20b of the tray, and a pair of shaped coupling ends 44.

The wire retaining member 40a is produced from a common cylindrical wire of circular cross-section steel, preferably having a diameter of between 1 and 2 mm, obtained by wire-drawing.

The coupling ends 44, intended to pass through an aperture 30 of the lateral wall of the bracket, consist of parallel lengths of wire 46 bent into a V-shape, which extend in planes orthogonal to the plane in which the concave section 42 lies. The segment 46a of the V-shaped length 46 adjacent to the concave section 42 is inclined with respect to the plane in which said section lies and forms an obtuse angle therewith. The free ends 46b of the V-shaped length are bent so as to extend in a direction normal to the axis of symmetry of said length.

In the mounted configuration (reference is made to Figure 1), when the concave central section 42 of the length of wire is disposed so as to surround a bottom wire 20b of the tray, the vertex 48 of the V-shaped length 46 engages the contour 32 of the aperture 30 at the portion 34 having the corrugated profile. This makes it possible to couple the retaining member between the tray and the bracket, preventing sliding thereof within the aperture and contributing to the tray being held in a stable manner in the transverse direction.

The sheet metal retaining member 40b is produced from a flat metal strip, of harmonic steel, obtained by shearing and bending and constituting the main body, bent in its central portion 42.

The coupling ends 44 are formed as parallel tongues 50 protruding from the main body bent into a U-shape, having at their free end a raised portion 52 or similar protruding shape.

Each of the two flexible halves of the main body bent into a U-shape has at least two consecutive flat segments 54, 56 connected along a supplementary fold line 58 of the strip and forming an obtuse angle with each other.

In the mounted configuration (reference is made to Figure 2), when the concave central portion 42 of the strip is disposed so as to surround a bottom wire 20b of the tray, the tongues 50 pass through a lateral aperture of the bracket, engaging the contour 32 of the aperture at the portion 34 having a corrugated profile, and the respective raised portions 52 engage with the inner face of the lateral wall in which the aperture is provided. This makes it possible to couple the retaining member between the tray and the bracket, preventing sliding thereof within the aperture and contributing to the tray being held in a stable manner in the transverse direction.

In this way, a stable configuration for fixing the tray is obtained, working from the outside thereof and on the side of the bracket.

The embodiments described in the above explanation are purely non-limiting examples of the present invention. An expert in the field will easily be able to implement the present invention in different embodiments which do not however depart from the principles disclosed herein.

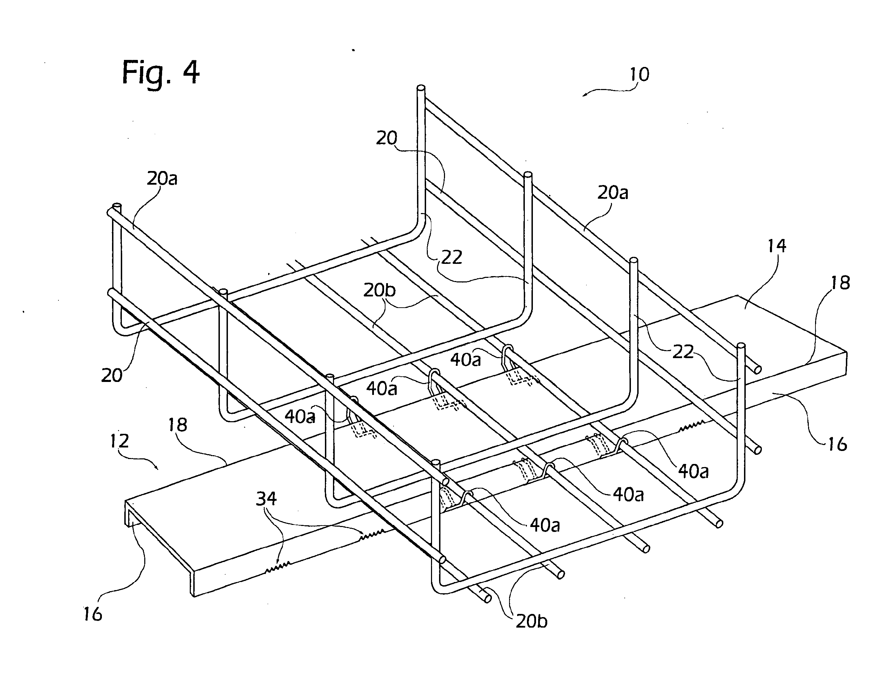

This applies in particular with regard to the possibility of using low profile C-shaped support sections in place of the perforated brackets, as shown in Figure 4. In this application, the retaining members described, or variants thereof if required, which are capable of engaging a bottom wire of the tray which bears on the base wall of the section, by surrounding it, are capable of engaging, on the opposite side, the free lower edge of the lateral wall of the section instead of the contour of an aperture provided in the wall.

In this application, the free edge of the lateral wall of the section, or portions thereof, may be shaped like the upper portion of the contour of the apertures 30 described and illustrated, so that they also have a toothed profile formed by a series of notches and projections, or an undulating profile, to allow the retaining member to be coupled while preventing sliding thereof and to hold the tray in a stable manner in a transverse direction.

## Claims

1. A system for fastening a mesh cable tray (10), comprising a series of longitudinal wires (20) and a series of U-shaped transverse wires (22) connected to one another so as to form a network, the series of longitudinal wires (20) including at least one bottom wire (20b), on a support section (12) comprising an upper support surface (14) for supporting the tray and a pair of lateral walls (16) connected to the longitudinal edges (18) of said surface (14),
**characterised in that** it includes at least one retaining member (40) for retaining the tray (10) on the section (12) and capable, on the one hand, of engaging a bottom wire (20b) of the tray (10) and, on the other hand, of engaging the free edge opposed to the longitudinal connecting edge (18) of one of said lateral walls (16) or of penetrating into an aperture (30) provided on one of said lateral walls (16) of the section (12) and of engaging the contour (32) of said aperture, at the transverse section plane in which the bottom wire (20b) is disposed, in such a way as to assume a stable coupling configuration.

2. A system according to claim 1, wherein said retaining member (40) is a wire retaining member (40a) or a retaining member (40b) made of sheet metal bent in a U-shape so as to have a concave section (42) capable of at least partially surrounding the bottom wire (20b) of the tray (10) and having a pair of shaped coupling ends (44).

3. A system according to claim 2 wherein, in the wire retaining member (40a), the coupling ends (44) consist of parallel lengths (46) of wire shaped into a V and intended to be inserted beneath the free edge or to pass through an aperture (30) of the lateral wall (16) of the section (12), the vertex (48) of said V-shaped length (46) being intended to engage with the aforesaid edge or, respectively, the contour (32) of the aperture (30).

4. A system according to claim 3, wherein the segment (46a) of the V-shaped length of wire adjacent to said concave section (42) extends in a plane orthogonal to the plane in which said section (42) lies, forming an obtuse angle therewith.

5. A system according to claim 4, wherein the free ends of the V-shaped length of wire (46) are bent so as to extend in a direction normal to the axis of symmetry of the V-shaped length (46).

6. A system according to claim 2 wherein, in the retaining member (40b) made of sheet metal, the coupling ends (44) are formed as parallel tongues (50) protruding from the main body (54, 56) bent in a U-shape and are intended to be inserted beneath the free edge or to pass through an aperture (30) of the lateral wall (16) of the section (12), each tongue (50) having at its free end a raised portion (52) or a similar projecting formation intended to engage with the inner face of said lateral wall (16).

7. A system according to claim 6, wherein the main body (54, 56) of the retaining member (40b) is formed by a metal strip bent in its central portion (42), each of the two halves having at least two consecutive flat segments (54; 56) connected along a supplementary fold line (58) of the strip and forming an obtuse angle with each other.

8. A system according to claim 1, wherein each lateral wall (16) of the section (12) has a plurality of apertures (30) the relative distances between which correspond to a predetermined distance between the longitudinal bottom wires (20b) of the tray (10).

9. A system according to claim 8, wherein said apertures (30) are of elongate oval shape.

10. A system according to claim 9, wherein said apertures (30) have an at least partially corrugated contour (32).

11. A system according to claim 10, wherein said contour (32) has a toothed profile.

12. A system according to claim 10, wherein said contour (32) has an undulating profile.

13. A support bracket (12) comprising an upper support surface (14) for supporting a cable tray (10) and a pair of lateral walls (16) connected to the longitudinal edges (18) of said surface, **characterised in that** said lateral walls (16) have a plurality of apertures (30) intended to receive respective retaining members (40) for retaining a mesh tray (10) bearing on the bracket (12), said bracket being capable of being used in a system according to claims 1 to 12.

14. A bracket according to claim 13, wherein each lateral wall (16) of the bracket (12) has a plurality of apertures (30) the relative distances between which correspond to a predetermined distance between the longitudinal bottom wires (20b) of the tray (10) which it is intended to receive.

15. A bracket according to claim 14, wherein said apertures (30) are of elongate oval shape.

16. A bracket according to claim 15, wherein said apertures (30) have an at least partially corrugated contour (32).

17. A bracket according to claim 16, wherein said contour (32) has a toothed profile.

18. A bracket according to claim 16, wherein said contour (32) has an undulating profile.

19. A retaining member (40) for fastening a mesh cable tray (10) of the type comprising a series of longitudinal wires (20) and a series of U-shaped transverse wires (22) connected to one another so as to form a network, wherein the series of longitudinal wires (20) include at least one bottom wire (20b), on a support section (12) comprising an upper support surface (14) for supporting the tray and a pair of lateral walls (16) connected to the longitudinal edges (18) of said surface (14), **characterised in that** it comprises a concave section (42) capable of at least partially surrounding a bottom wire (20b) of the tray (10) and a pair of shaped coupling ends (44) capable of engaging the free edge opposed to the longitudinal connecting edge (18) of one of said lateral walls (16) or of penetrating into an aperture (30) provided on one of said lateral walls (16) of the section (12) and of engaging the contour (32) of said aperture, at the transverse section plane in which the bottom wire (20b) is disposed, in such a way as to assume a stable coupling configuration, said member (40) being capable of being used in a system according to claims 1 to 12.

20. A retaining member (40) according to claim 19, formed as a wire retaining member (40a) bent in a U-shape and in which the coupling ends (44) consist of parallel lengths of wire shaped into a V (46) and intended to be inserted beneath the free edge or to pass through an aperture (30) of the lateral wall (16) of the section (12), the vertex (48) of said V-shaped length (46) being intended to engage with the aforesaid edge or, respectively, with the contour (32) of the aperture (30).

21. A retaining member (40a) according to claim 20, wherein the segment (46a) of the V-shaped length of wire (46) adjacent to said concave section (42) extends in a plane orthogonal to the plane in which said section (42) lies, forming an obtuse angle therewith.

22. A retaining member (40a) according to claim 21, wherein the free ends of the V-shaped length of wire (46) are bent so as to extend in a direction normal to the axis of symmetry of the V-shaped length (46).

23. A retaining member (40) according to claim 19, formed as a retaining member made of sheet metal (40b) bent into a U-shape and in which the coupling ends (44) are formed as parallel tongues (50) protruding from the main body bent into a U-shape and are intended to be inserted beneath the free edge or to pass through an aperture (30) of the lateral wall (16) of the section (12), each tongue (50) having at its free end a raised portion (52) or similar projecting formation intended to engage with the inner face of said lateral wall (16).

24. A retaining member (40b) according to claim 23, wherein the main body of the retaining member (40b) is formed by a metal strip bent in its central portion (42), each of the two halves having at least two consecutive flat segments (54, 56) connected along a supplementary fold line (58) of the strip and forming an obtuse angle with each other.
